# FASCICULE DE BREVET EUROPEEN

(11) **EP 1 144 207 B1**
(45) Date de publication et mention de la délivrance du brevet: **25.08.2004**
(21) Numéro de dépôt: 99968358.4
(22) Date de dépôt: 20.12.1999
(51) Int. Cl.: B60C 15/06

(54) **BOURRELET DE PNEUMATIQUE RADIAL**
RADIALREIFENWULST
RADIAL TYRE BEAD

(30) Priorité: 24.12.1998 FR 9816478
(43) Date de publication de la demande: 17.10.2001
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: AUXERRE, Pascal, F-63130 Royat (FR)
(74) Mandataire: Diernaz, Christian
(86) Numéro de dépôt international: PCT/EP1999/010133
(87) Numéro de publication internationale: WO 2000/038938

(56) Documents cités:
- EP-A- 0 251 145
- EP-A- 0 678 404
- EP-A- 0 749 855
- EP-A- 0 818 331
- US-A- 5 196 077
- US-A- 5 433 257

## Description

La présente invention concerne un pneumatique à armature de carcasse radiale, et plus particulièrement à un pneumatique de type "Poids-Lourds", destiné à équiper un véhicule tel que camion, tracteur routier, autobus, remorque, et autre. Elle concerne plus spécifiquement une nouvelle structure de bourrelet.

En général, un pneumatique du type considéré comprend une armature de carcasse formée d'au moins une nappe de câbles métalliques, ancrée dans chaque bourrelet à au moins une tringle, en formant un retournement. L'armature de carcasse est radialement surmontée d'une armature de sommet, composée d'au moins deux nappes de câbles métalliques, croisés d'une nappe à la suivante en formant avec la direction circonférentielle des angles compris entre 10° et 45°. Les retournements d'armature de carcasse sont généralement renforcés par au moins une nappe de câbles métalliques orientés à un faible angle par rapport à la direction circonférentielle.

Dans le cas du pneumatique considéré, la nappe de renforcement du bourrelet peut être enroulée autour de la tringle, de sorte à présenter un brin axialement extérieur et un brin axialement intérieur, l'extrémité radialement supérieure du brin axialement intérieur étant généralement située au dessous de l'extrémité radialement supérieure du brin axialement extérieur.

La solution connue a pour but d'éviter la déradialisation des câbles du retournement de l'armature de carcasse, ainsi que de minimiser les déformations radiales et circonférentielles subies par l'extrémité dudit retournement, et par la couche de caoutchouc extérieure recouvrant le bourrelet et assurant la liaison avec la jante.

La demande française FR-A-2 781 425 publiée le 28 janvier 2000 et, par conséquent, n'appartenant pas à l'état de la technique, en vue d'améliorer l'endurance d'un pneumatique ayant des bourrelets destinés à être montés sur des sièges de jante plats ou inclinés à 5°, utilise une armature de renforcement de bourrelet à éléments radiaux. Le pneumatique, décrit dans ladite demande, a chaque bourrelet doté d'une première armature de renforcement formée d'au moins une nappe d'éléments de renforcement radiaux, enroulée autour de la tringle d'ancrage de l'armature de carcasse et à l'intérieur de ladite armature de carcasse pour former deux brins de sorte que le brin axialement intérieur, entre son bord radialement supérieur, parallèle au profil méridien d'armature de carcasse, et son point de tangence à la tringle d'ancrage suive un tracé rectiligne dit "du plus court chemin", et que l'extrémité radialement supérieure dudit brin axialement intérieur soit radialement située à une distance H_{LI} de la base du bourrelet, comprise entre 80% et 160% de la distance H_{RNC}, distance radiale séparant l'extrémité du retournement d'armature de carcasse de la base de bourrelet, la deuxième armature d'éléments inclinés par rapport à la direction radiale n'étant pas enroulée autour de ladite tringle d'ancrage et disposée axialement à l'extérieur du retournement d'armature de carcasse.

Les éléments de renforcement radiaux de la ou des nappes de l'armature de renforcement de bourrelet sont de préférence des éléments métalliques inextensibles, en acier et sous forme de câbles.

Le demande française citée ci-dessus suggère en outre, et en vue d'améliorer la résistance de l'armature de carcasse aux ruptures d'éléments de renforcement se produisant dans ses portions faisant partie intégrante des bourrelets, de conférer aux dites portions le même profil que celui des nappes de renforcement de bourrelet à éléments radiaux, c'est-à-dire un profil rectiligne.

Les recherches de la demanderesse ont mis en évidence qu'une telle structure de renforcement de bourrelet avec, en particulier, un profil méridien rectiligne de la partie principale d'armature de carcasse tangente à la tringle d'ancrage, pouvait être nettement améliorée par un choix judicieux des mélanges vulcanisés de caoutchouc constituant le bourrelet du pneumatique.

EP-A-0 818 331 montre un pneumatique correspondant au préambule de la revendication 1.

Le pneumatique, conforme à l'invention, à armature de carcasse radiale, ancrée dans chaque bourrelet à une tringle d'ancrage pour former un retournement, la tringle d'ancrage étant surmontée radialement d'un premier profilé de mélange vulcanisé caoutchouteux et de forme, vue en section méridienne, sensiblement triangulaire, le bord supérieur du retournement étant séparé de la partie principale de ladite armature par un deuxième profilé de mélange vulcanisé caoutchouteux, est caractérisé en ce que le module sécant d'élasticité en tension du premier profilé, mesuré pour un allongement relatif de 10%, est compris entre 8 et 10 MPa, alors que le module sécant d'élasticité en tension du deuxième profilé, mesuré dans les mêmes conditions, est compris entre 3 et 5 MPa, un troisième profilé de mélange vulcanisé caoutchouteux étant disposé axialement à l'extérieur du retournement d'armature de carcasse et dont le module sécant d'élasticité en tension, mesuré dans les mêmes conditions, est compris entre 35 et 50 MPa, alors qu'un quatrième profilé surmontant radialement le troisième profilé a un module sécant d'élasticité en tension, mesuré dans les mêmes conditions, compris entre 3 et 5 MPa, l'extrémité radialement inférieure dudit quatrième profilé étant située radialement à une distance inférieure à la distance séparant l'extrémité du retournement d'armature de carcasse de la base D des bourrelets, le troisième profilé ayant une épaisseur décroissant radialement vers l'extérieur, telle que la distance radiale, séparant de la droite D le point de la droite parallèle à l'axe de rotation pour laquelle ladite épaisseur est égale à 10% de l'épaisseur maximale, soit inférieure à la distance radiale séparant l'extrémité du retournement d'armature de carcasse de ladite droite D, et ladite partie principale d'armature de carcasse présentant, entre son point de tangence T à la tringle d'ancrage et un point A situé à une distance H_{A} de la base D, comprise entre 35% et 65% de la distance radiale H_{E} séparant les points de largeur axiale maximale de ladite armature de carcasse de ladite base D, un profil méridien sensiblement rectiligne,

La présence d'un troisième profilé, à très haut module d'élasticité et compris axialement entre le retournement d'armature de carcasse et la couche de mélange de caoutchouc, assurant le contact avec le rebord de jante et dont le module sécant d'élasticité en tension est compris entre 10 et 15 MPa, évite pratiquement tout mouvement de rotation à la tringle d'ancrage d'armature de carcasse, quelle que soit la structure de ladite tringle, l'effet obtenu étant cependant nettement plus important pour une tringle de type "tressé".

Il est particulièrement avantageux que le troisième profilé soit radialement à l'intérieur prolongé de manière à pouvoir être retourné autour de l'ensemble tringle et recouvrir ainsi au moins une demi-circonférence de l'ensemble ci-dessus. Il faut entendre par ensemble tringle un ensemble formé principalement de la tringle, de l'armature de carcasse, et éventuellement d'une ou des armatures de renforcement additionnelles.

La tringle d'ancrage de l'armature de carcasse est généralement entourée d'une couche de mélange vulcanisé : le module sécant d'élasticité en tension de ladite couche qui enrobe la tringle d'ancrage sera sensiblement égal au module sécant d'élasticité en tension du troisième profilé.

L'endurance du bourrelet comportant de tels profilés sera améliorée par l'addition, entre la partie principale d'armature de carcasse et le retournement d'armature de carcasse, d'une armature de renforcement composée dune nappe d'éléments de renforcement radiaux, enroulée autour de la tringle d'ancrage pour former deux brins, l'extrémité radialement supérieure du brin axialement intérieur étant radialement située à une distance H_{LI} de la base du bourrelet, comprise entre 80% et 160% de la distance H_{RNC}, distance radiale séparant l'extrémité du retournement d'armature de carcasse de la base de bourrelet, et le brin axialement extérieur, situé axialement à l'intérieur du retournement de l'armature de carcasse, ayant préférentiellement son extrémité radialement supérieure radialement moins éloignée de l'axe de rotation que l'extrémité du retournement d'armature de carcasse, la distance H_{LE} séparant ladite extrémité de la base du bourrelet étant comprise entre 0,2 et 0,8 fois la hauteur H_{RNC} du retournement d'armature de carcasse.

Les caractéristiques de l'invention seront mieux compris à l'aide de la description qui suit et qui se réfère au dessin, illustrant à titre non limitatif des exemples d'exécution, dessin sur lequel,
* la figure 1 représente schématiquement, vu en section méridienne, une première variante de bourrelet conforme à l'invention,
* la figure 2 représente schématiquement une deuxième variante, alors que
* la figure 3 représente schématiquement une troisième variante.

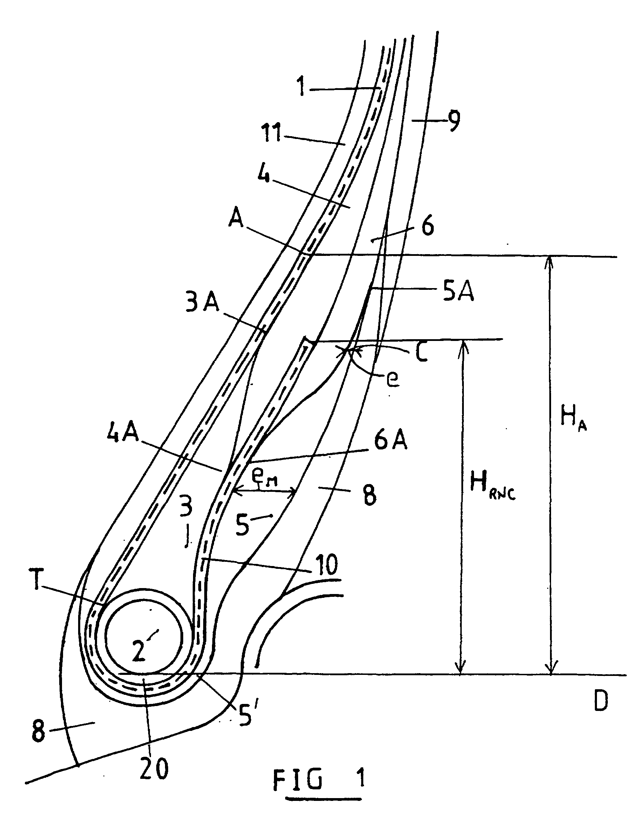

Le bourrelet B représenté sur la figure 1 est celui d'un pneumatique 305/70 R 22.5, destiné à être monté sur une jante comportant des sièges de jante inclinés à 15°. Autour de ladite tringle (2) est ancrée une armature de carcasse (1) composée d'une seule nappe de câbles métalliques pratiquement inextensibles, ancrée dans chaque bourrelet à une tringle (2) enrobée d'une couche vulcanisée de caoutchouc (20) pour former un retournement (10). Entre un point A, situé à une distance H_{A} de la base D des bourrelets, [ladite base étant par convention représentée par la droite parallèle à l'axe de rotation passant par le point de la tringle (2) le plus rapproché dudit axe de rotation, égale à 50% de la distance radiale H_{E} séparant les points de largeur axiale maximale de ladite armature de carcasse de ladite base D, et son point de tangence T à la tringle (2) munie de la couche d'enrobage (20), l'armature de carcasse (1) a dans sa partie principale un profil méridien sensiblement rectiligne. Il faut entendre par sensiblement rectiligne d'une part un profil rectiligne et d'autre part un profil légèrement concave ou convexe dont la flèche en son milieu est au plus égale à 1% de H_{E}. La distance radiale H_{RNC} séparant l'extrémité radialement supérieure dudit retournement (10) de la base D du bourrelet, étant, dans l'exemple étudié, inférieure à la distance H_{A}.

Entre l'armature de carcasse (1) et son retournement (10), radialement au dessus de la tringle (2), est disposé un premier profilé ou premier bourrage de tringle (3) en mélange vulcanisé caoutchouteux dont le module sécant d'élasticité en tension M₁₀ est égal à 10 MPa. Le module M₁₀ représente pour un mélange caoutchouteux donné, le rapport entre la contrainte de traction σ₁₀ pour un allongement relatif δL/L de 10% et ledit allongement, L étant la longueur initiale de l'éprouvette et δL l'allongement de l'éprouvette. Ledit module M₁₀ est déterminé conformément à la norme AFNOR-NF-T46-002 de septembre 1988, dans les conditions normales de température et d'hygrométrie selon la norme AFNOR-NF-T40-101 de décembre 1979. Ledit bourrage (3) est prolongé radialement par un deuxième profilé ou deuxième bourrage (4) de tringle en mélange vulcanisé caoutchouteux de module sécant M₁₀, mesuré dans les mêmes conditions que le précédent, égal à 4 MPa.

Axialement à l'extérieur du retournement d'armature de carcasse (10) est placé un troisième profilé (5) de mélange vulcanisé caoutchouteux de forme sensiblement losangique dont le module sécant M₁₀ d'élasticité en tension est égal à 45 MPa. Ledit profilé (5) se prolonge radialement à l'intérieur par une couche (5') du même mélange d'épaisseur sensiblement constante et entourant l'ensemble formé de la tringle (2) et son enrobage (20). Il est radialement surmonté d'un quatrième profilé (6) en mélange vulcanisé caoutchouteux de module sécant M₁₀ d'élasticité en tension égal 4 MPa, et donc égal au module M₁₀ du deuxième bourrage de tringle (4).

L'extrémité radialement supérieure (3A) du premier bourrage (3) est située à une distance radiale de la base D de bourrelet supérieure à la distance H_{RNC}, alors que l'extrémité radialement inférieure (4A) du profilé (4) est située radialement, comme connu en soi, au-dessous de l'extrémité du retournement d'armature de carcasse. Quant à l'extrémité radialement supérieure du profilé (4), elle est sensiblement située au niveau de la largeur axiale maximale du pneumatique.

Alors que l'extrémité radialement supérieure du profilé (6) (non montrée) est sensiblement située, comme l'extrémité supérieure du profilé (4), au niveau de la largeur axiale maximale du pneumatique, tout en étant radialement au-dessus de ladite extrémité de profilé (4), sa jonction avec le troisième profilé (5) est telle que son extrémité radialement inférieure (6A) soit séparée radialement de la droite D par une distance inférieure à la distance H_{RNC} séparant l'extrémité du retournement (10) d'armature de carcasse de ladite base D. Quant à l'extrémité radialement supérieure (5A) du troisième profilé (5), elle peut être située à une distance radiale de la droite D, inférieure ou supérieure à la distance H_{RNC}, mais l'épaisseur e du profilé (5), mesurée sur une droite parallèle à l'axe de rotation, étant radialement décroissante vers l'extérieur, le point C de la droite parallèle à l'axe de rotation pour laquelle ladite épaisseur est égale à 10% de l'épaisseur maximale e_{M}, est distant de la droite D d'une quantité, dans tous les cas, inférieure à la valeur H_{RNC}.

La couche (8) de mélange vulcanisé caoutchouteux qui constitue l'extérieur du bourrelet B et assure le contact avec la jante de montage, a un module sécant d'élasticité en tension, dans l'exemple décrit, égal à 11 MPa. Le bourrelet B est complété par une couche de flanc (9) et une couche intérieure (11), constituées respectivement de mélanges caoutchouteux adaptés à leurs fonctions.

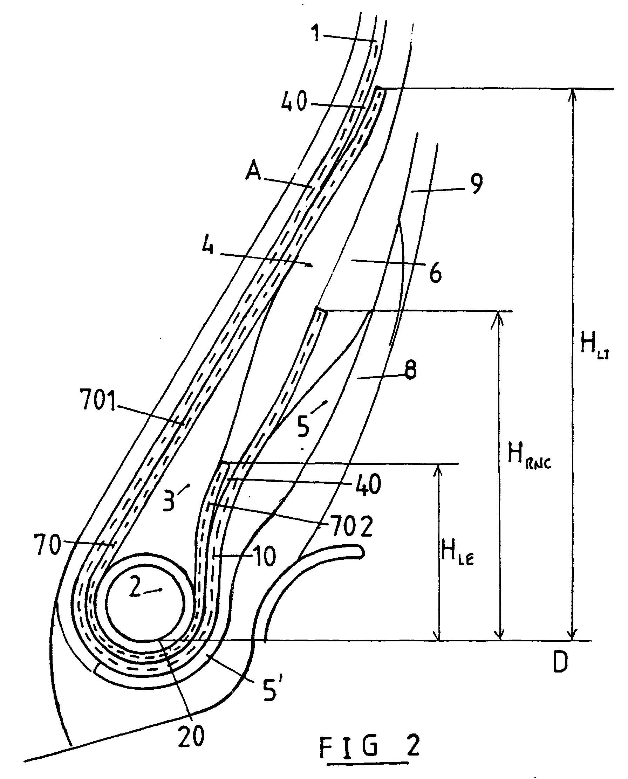

Le deuxième exemple, décrit et montré sur la figure 2, diffère de l'exemple montré sur la figure 1 par la présence entre l'armature de carcasse (1) et son retournement (10) d'une armature additionnelle de renforcement (7) de bourrelet B. Axialement à l'extérieur de la partie non retournée de la nappe de carcasse (1) et, après retournement autour de la tringle (2), axialement à l'intérieur du retournement (10) de la nappe (1), est disposée une armature de renforcement (7) de bourrelet composée, dans l'exemple décrit, d'une seule nappe (70), de manière à former deux brins, un brin axialement intérieur (701) et un brin axialement extérieur (702). Les extrémités radialement supérieures respectivement des deux brins (701) et (702) sont situées par rapport à la base du bourrelet à des hauteurs H_{LI} et H_{LE,} les distances H_{LE} et H_{LI} étant respectivement égales à 40% et 150% de la distance H_{RNC}. La nappe (70) de ladite armature est formée de fils ou câbles métalliques radiaux et dans l'exemple décrit orientés à 90° par rapport à la direction circonférentielle (seront considérés comme radiaux des éléments de renforcement faisant avec la direction circonférentielle un angle compris dans l'intervalle (-85°, +85°). Axialement à l'extérieur du brin axialement extérieur (702) de la nappe de renforcement (70)et du retournement (10)de l'armature de carcasse (1), se trouve le bourrage (5) à très haut module d'élasticité puisqu'égal, dans ce cas, à 40 MPa, ledit bourrage (5) étant radialement, comme dans les cas précédents surmonté d'un profilé (6) présentant les mêmes propriétés que les profilés (6) cités dans les exemples des figures 1 et 2. Le bord du brin axialement intérieur (701) ainsi que le bord axialement extérieur (702) de ladite nappe (70) sont axialement sensiblement parallèles respectivement à la partie non retournée et au retournement (10) de la nappe de carcasse (1), tout en étant désaccouplés de la dite partie et dudit retournement par une couche de mélange caoutchouteux (40).

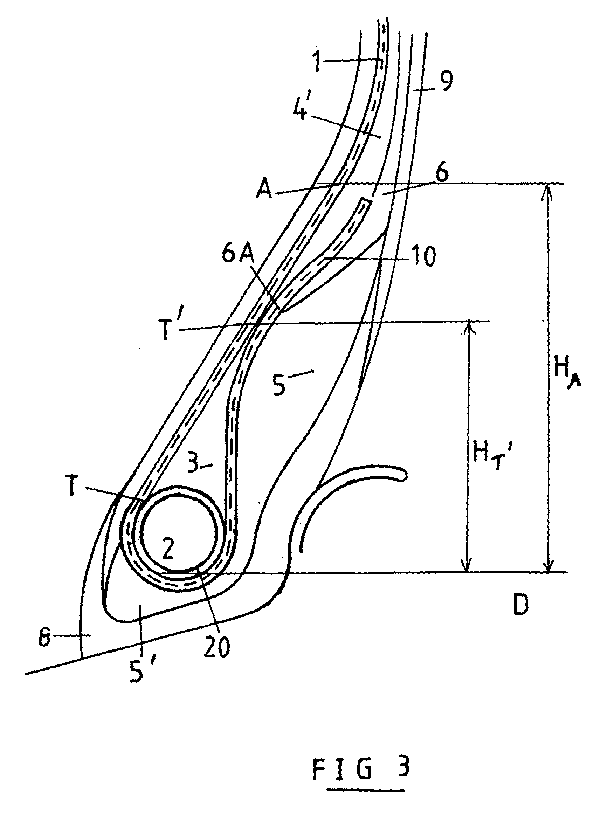

La troisième variante, montrée sur la figure 3, diffère de la variante de la figure 1 par le fait que le retournement (10) d'armature de carcasse (1) vient axialement tangenter la partie principale d'armature de carcasse dans la région autour du point A, précédemment défini et où l'armature de carcasse (1) présente un profil méridien sensiblement rectiligne. Il faut entendre par région autour du point A une distance radiale d'au plus 20% de la distance radiale H_{E} séparant les points de largeur axiale maximale de ladite armature de carcasse de la base D de bourrelet. Dans le cas précisément décrit, le point de tangence T' entre la partie principale d'armature de carcasse (1) et son retournement (10) est à une distance radiale H_{T'} de la base D égale à 35% de la hauteur H_{E}, alors que le point A est à la distance H_{A} égale à 50% de H_{E}. axialement au-dessous dudit point de tangence T', armature de carcasse (1) et retournement (10) sont axialement séparées par un premier bourrage de tringle (3) dont le module sécant d'extension est égal à 10 MPa. Radialement au-dessus du point T' est disposée une couche de découplage (4'), séparant le bord supérieur du retournement (10) (il faut entendre par bord d'une nappe de renforcement une partie de la dite nappe ayant à partir de son extrémité une longueur au moins égale à 15 mm), et en particulier l'extrémité dudit retournement (10), de la partie principale d'armature de carcasse (1), ladite couche pouvant avoir une épaisseur constante, généralement comprise entre deux et trois fois l'épaisseur de l'armature de carcasse et le mélange caoutchouteux constituant ladite couche (4') ayant les mêmes composition et propriétés que le mélange de profilé (4) utilisé dans les deux exemples précédents. Axialement à l'extérieur du retournement (10) sont disposés deux profilés (5) et (6) constitués respectivement des mêmes mélanges que ceux des profilés (5) et (6) du premier exemple décrit, l'extrémité radialement inférieure (6A) du profilé (6) étant situé radialement légèrement au-dessus du point T' de tangence. Le profilé (5) présente la particularité d'être prolongé par une couche (5') constituée du même mélange que le mélange du profilé (5), mais à épaisseur variable de manière à avoir une forme quasi-triangulaire dans la région de la pointe de talon.

## Revendications

1. Pneumatique à armature de carcasse radiale (1), ancrée dans chaque bourrelet B à une tringle d'ancrage (2) pour former un retournement (10), la tringle d'ancrage (2) étant surmontée radialement d'un premier profilé (3) de mélange vulcanisé caoutchouteux et de forme, vue en section méridienne, sensiblement triangulaire, le bord supérieur du retournement (10) étant séparé de la partie principale de ladite armature de carcasse (1) par un deuxième profilé (4) de mélange vulcanisé caoutchouteux, **caractérisé en ce que** le module sécant d'élasticité en tension M₁₀ du premier profilé (3), est compris entre 8 et 10 MPa, alors que le module sécant d'élasticité en tension M₁₀ du deuxième profilé (4) est compris entre 3 et 5 MPa, un troisième profilé (5) de mélange vulcanisé caoutchouteux étant disposé axialement à l'extérieur du retournement (10) d'armature de carcasse et dont le module sécant d'élasticité en tension M₁₀ est compris entre 35 et 50 MPa, alors qu'un quatrième profilé (6) surmontant radialement le troisième profilé (5) a un module sécant d'élasticité en tension M₁₀ compris entre 3 et 5 MPa, l'extrémité radialement inférieure (6A) dudit quatrième profilé (6) étant située radialement à une distance inférieure à la distance H_{RNC} séparant l'extrémité du retournement (10) d'armature de carcasse (1) de la base D des bourrelets, le troisième profilé (5) ayant une épaisseur e décroissant radialement vers l'extérieur, telle que la distance radiale, séparant de la droite D le point C de la droite parallèle à l'axe de rotation pour laquelle ladite épaisseur e est égale à 10% de l'épaisseur maximale e_{M} est inférieure à la distance H_{RNC}, et ladite partie principale d'armature de carcasse présentant, entre son point de tangence T à la tringle d'ancrage (2) et un point A situé à une distance H_{A} de la base D, comprise entre 35% et 65% de la distance radiale H_{E} séparant les points de largeur axiale maximale de ladite armature de carcasse (1) de ladite base D, un profil méridien sensiblement rectiligne.

2. Pneumatique selon la revendication 1, **caractérisé en ce que** la couche de mélange de caoutchouc (8) assurant le contact avec le rebord de jante a un module sécant d'élasticité en tension compris entre 10 et 15 MPa.

3. Pneumatique selon le revendication 1, **caractérisé en ce que** les tringles d'ancrage (2) sont des tringles de type "tressé".

4. Pneumatique selon la revendication 1, **caractérisé en ce que** le module sécant d'élasticité en tension M₁₀ de la couche de mélange vulcanisé (20) qui enrobe la tringle d'ancrage (2) de l'armature de carcasse (1) sera sensiblement égal au module sécant d'élasticité en tension M₁₀ du profilé (5).

5. Pneumatique selon l'une des revendications 1 à 4, **caractérisé en ce que** le troisième profilé (5) est radialement à l'intérieur prolongé par une couche (5') de même mélange et d'épaisseur sensiblement constante, de manière à pouvoir être retournée autour de l'ensemble tringle (2), et recouvrir ainsi au moins une demi-circonférence dudit ensemble.

6. Pneumatique selon l'une des revendications 1 à 5, **caractérisé en ce qu'**une armature de renforcement additionnelle (7) composée d'une nappe (70) d'éléments de renforcement radiaux, enroulée autour de la tringle d'ancrage (2) pour former deux brins (701) et (702) respectivement axialement à l'extérieur de la partie principale d'armature de carcasse (1) et axialement à l'intérieur du retournement (10), l'extrémité radialement supérieure du brin axialement intérieur (701) étant radialement située à une distance H_{LI} de la base du bourrelet, comprise entre 80% et 160% de la distance H_{RNC}, distance radiale séparant l'extrémité du retournement (10) d'armature de carcasse (1) de la base D de bourrelet, et le brin axialement extérieur (702), ayant son extrémité radialement supérieure radialement moins éloignée de l'axe de rotation que l'extrémité du retournement (10) d'armature de carcasse, la distance H_{LE} séparant ladite extrémité de la base D du bourrelet étant comprise entre 0,2 et 0,8 fois la hauteur H_{RNC} du retournement (10) d'armature de carcasse.

7. Pneumatique selon l'une des revendications là 5, **caractérisé en ce que** le retournement (10) d'armature de carcasse (1) tangente en T' la partie principale de ladite armature (1), le point T' étant situé radialement dans la région s'étendant, sur une distance radiale d'au plus 20% de la distance radiale H_{E}, autour du point A, l'armature de carcasse (1) et son retournement (10) étant, radialement au-dessous dudit point de tangence T', axialement séparés par un deuxième profilé (3) dont le module sécant d'extension est compris entre 8 MPa et 10 MPa, et le bord supérieur du retournement (10), en particulier l'extrémité dudit retournement (10) étant, radialement au-dessus du point T', axialement séparés de la partie principale d'armature de carcasse (1), par une couche de découplage (4') de mélange vulcanisé caoutchouteux de module sécant d'élasticité M₁₀ compris entre 3 et 5 MPa.

## Patentansprüche

1. Luftreifen mit radialer Karkassenbewehrung ( 1 ), die in jedem Wulst B unter Bildung eines Hochschlags (10) an einem zur Befestigung dienenden Wulstkern (2) verankert ist, wobei in radialer Richtung über dem zur Befestigung dienenden Wulstkern (2) ein erstes Profilteil (3) aus einer vulkanisierten Kautschukmischung liegt, das im Meridianschnitt eine im Wesentlichen dreieckige Form aufweist, und der obere Rand des Hochschlags (10) von dem Hauptteil der Karkassenbewehrung ( 1 ) durch ein zweites Profilteil (4) aus einer vulkanisierten Kautschukmischung getrennt ist, **dadurch gekennzeichnet, dass** der Sekanten-Elastizitätsmodul unter Zugbeanspruchung M₁₀ des ersten Profilteils (3) im Bereich von 8 bis 10 MPa liegt, während der Sekanten-Elastizitätsmodul unter Zugbeanspruchung M₁₀ des zweiten Profilteils (4) 3 bis 5 MPa beträgt, wobei axial auf der Außenseite des Hochschlags (10) der Karkassenbewehrung ein drittes Profilteil (5) aus einer vulkanisierten Kautschukmischung angeordnet ist, dessen Sekanten-Elastizitätsmodul unter Zugbeanspruchung M₁₀ 35 bis 50 MPa beträgt, während ein viertes Profilteil (6), das radial über dem dritten Profilteil (5) liegt, einen Sekanten-Elastizitätsmodul unter Zugbeanspruchung M₁₀ im Bereich von 3 bis 5 MPa aufweist, wobei sich das radial untere Ende (6A) des vierten Profilteils (6) in radialer Richtung in einem Abstand von der Basis D der Wülste befindet, der kleiner ist als der Abstand H_{RNC}, der das Ende des Hochschlags (10) der Karkassenbewehrung (1) von der Basis D trennt, wobei das dritte Profilteil (5) eine radial zur Außenseite hin abnehmende Dicke e aufweist, die so ist, dass der radiale Abstand, der den Punkt C der parallel zur Drehachse verlaufenden Geraden, an dem die Dicke e 10 % der maximalen Dicke e_{M} beträgt, von der Geraden D trennt, kleiner ist als der Abstand H_{RNC}, und wobei der Hauptteil der Karkassenbewehrung zwischen seinem Berührungspunkt T mit dem zur Befestigung dienenden Wulstkern (2) und einem Punkt A, der sich in einem Abstand H_{A} zur Basis D befindet, der im Bereich von 35 bis 65 % des radialen Abstands H_{E} liegt, welcher die Punkte der maximalen axialen Breite der Karkassenbewehrung ( 1 ) von der Basis D trennt, ein im Wesentlichen geradliniges Meridianprofil aufweist.

2. Luftreifen nach Anspruch 1, **dadurch gekennzeichnet, dass** die Schicht (8) aus einer Kautschukmischung, die den Kontakt mit dem Felgenhorn sicher stellt, einen Sekanten-Elastizitätsmodul unter Zugbeanspruchung im Bereich von 10 bis 15 MPa aufweist.

3. Luftreifen nach Anspruch 1, **dadurch gekennzeichnet, dass** die zur Befestigung dienenden Wulstkerne (2) Wulstkerne vom "gedrehten" Typ sind.

4. Luftreifen nach Anspruch 1, **dadurch gekennzeichnet, dass** der Sekanten-Elastizitätsmodul unter Zugbeanspruchung M₁₀ der Schicht (20) aus einer vulkanisierten Mischung, die den zur Befestigung dienenden Wulstkern (2) der Karkassenbewehrung (1) umhüllt, im Wesentlichen dem Sekanten-Elastizitätsmodul unter Zugbeanspruchung M₁₀ des Profilteils (5) entspricht.

5. Luftreifen nach einem der Ansprüche 1 bis 4, **dadurch gekennzeichnet, dass** sich das dritte Profilteil (5) radial nach innen in einer Schicht (5') aus der gleichen Mischung und mit im Wesentlichen konstanter Dicke fortsetzt, so dass es um die Wulstkern-Einheit (2) umgeschlagen werden kann und auf diese Weise zumindest den halben Umfang der Einheit bedeckt.

6. Luftreifen nach einem der Ansprüche 1 bis 5, **dadurch gekennzeichnet, dass** eine zusätzliche Verstärkungsbewehrung (7), die aus einer Lage (70) von radialen Verstärkungselementen besteht, um den zur Befestigung dienenden Wulstkern (2) umgeschlagen ist, so dass axial auf der Außenseite des Hauptteils der Karkassenbewehrung (1) bzw. axial auf der Innenseite des Hochschlags (10) zwei Teilstücke (701) und (702) entstehen, wobei das radial obere Ende des axial innen liegenden Teilstücks (701) in radialer Richtung in einem Abstand H_{LI} von der Basis des Wulstes liegt, der 80 bis 160 % des Abstands H_{RNC} beträgt, wobei es sich um den radialen Abstand handelt, der das Ende des Hochschlags (10) der Karkassenbewehrung (1) von der Basis D des Wulstes trennt, und das radial obere Ende des axial außen liegenden Teilstücks (702) in radialer Richtung weniger weit von der Drehachse entfernt ist als das Ende des Hochschlags (10) der Karkassenbewehrung, wobei der Abstand H_{LE}, der dieses Ende von der Basis D des Wulstes trennt, 0,2 bis 0,8 mal so groß ist wie die Höhe H_{RNC} des Hochschlags (10) der Karkassenbewehrung.

7. Luftreifen nach einem der Ansprüche 1 bis 5, **dadurch gekennzeichnet, dass** der Hochschlag (10) der Karkassenbewehrung (1) an T' den Hauptteil der Bewehrung (1) berührt, wobei der Punkt T' in radialer Richtung in einem Bereich liegt, der sich über einen radialen Abstand von höchstens 20 % des radialen Abstands H_{E} um den Punkt A erstreckt, wobei die Karkassenbewehrung (1) und ihr Hochschlag (10) radial unterhalb des Berührungspunktes T' in axialer Richtung durch ein zweites Profilteil (3) getrennt sind, dessen Sekanten-Dehnungsmodul im Bereich von 8 bis 10 MPa liegt, und wobei der obere Rand des Hochschlags (10) und insbesondere das Ende des Hochschlags (10) radial oberhalb des Punktes T' in axialer Richtung durch eine Trennschicht (4') aus einer vulkanisierten Kautschukmischung mit einem Sekanten-Elastizitätsmodul Mio von 3 bis 5 MPa von dem Hauptteil der Karkassenbewehrung ( 1 ) getrennt ist.

## Claims

1. A tyre having a radial carcass reinforcement (1), anchored in each bead B to an anchoring bead wire (2) to form an upturn (10), the anchoring bead wire (2) being surmounted radially by a first profiled member (3) of vulcanised rubber mix and of a substantially triangular shape when viewed in meridian section, the upper edge of the upturn (10) being separated from the main part of said carcass reinforcement (1) by a second profiled member (4) of vulcanised rubber mix, **characterised in that** the secant modulus of elasticity in tension M₁₀ of the first profiled member (3) is between 8 and 10 MPa, whereas the secant modulus of elasticity in tension M₁₀ of the second profiled member (4) is between 3 and 5 MPa, a third profiled member (5) of vulcanised rubber mix being arranged axially to the outside of the carcass reinforcement upturn (10) and the secant modulus of elasticity in tension M₁₀ of which is between 35 and 50 MPa, whereas a fourth profiled member (6) radially surmounting the third profiled member (5) has a secant modulus of elasticity in tension M₁₀ of between 3 and 5 MPa, the radially lower end (6A) of said fourth profiled member (6) being located radially at a distance less than the distance H_{RNC} between the end of the upturn (10) of the carcass reinforcement (1) and the base D of the beads, the third profiled member (5) having a thickness e which decreases radially towards the outside, such that the radial distance separating from the straight line D the point C of the straight line parallel to the axis of rotation for which said thickness e is equal to 10% of the maximum thickness e_{M}, is less than the distance H_{RNC}, and said main part of the carcass reinforcement having a substantially rectilinear meridian profile between its point of tangency T to the anchoring bead wire (2) and a point A located at a distance H_{A} from the base D of between 35% and 65% of the radial distance H_{E} between the points of maximum axial width of said carcass reinforcement (1) and said base D.

2. A tyre according to Claim 1, **characterised in that** the layer of rubber mix (8) which effects contact with the rim flange has a secant modulus of elasticity in tension of between 10 and 15 MPa.

3. A tyre according to Claim 1, **characterised in that** the anchoring bead wires (2) are bead wires of the "braided" type.

4. A tyre according to Claim 1, **characterised in that** the secant modulus of elasticity in tension M₁₀ of the layer of vulcanised mix (20) which surrounds the anchoring bead wire (2) of the carcass reinforcement (1) will be substantially equal to the secant modulus of elasticity in tension M₁₀ of the profiled member (5).

5. A tyre according to one of Claims 1 to 4, **characterised in that** the third profiled member (5) is extended radially to the inside by a layer (5') of the same mix and of substantially constant thickness, so as to be able to be turned up around the bead wire assembly (2), and thus to cover at least half the circumference of said assembly.

6. A tyre according to one of Claims 1 to 5, **characterised in that** an additional reinforcement armature (7) formed of a ply (70) of radial reinforcement elements which is wound around the anchoring bead wire (2) to form two strands (701) and (702) respectively axially to the outside of the main part of the carcass reinforcement (1) and axially to the inside of the upturn (10), the radially upper end of the axially inner strand (701) being radially located at a distance H_{LI} from the base of the bead of between 80% and 160% of the distance H_{RNC}, the radial distance between the end of the upturn (10) of the carcass reinforcement (1) and the base D of the bead, and the axially outer strand (702), having its radially upper end radially less far from the axis of rotation than the end of the carcass reinforcement upturn (10), the distance H_{LE} between said end and the base D of the bead being between 0.2 and 0.8 times the height H_{RNC} of the carcass reinforcement upturn (10).

7. A tyre according to one of Claims 1 to 5, **characterised in that** the upturn (10) of the carcass reinforcement (1) which forms a tangent at T' to the main part of said reinforcement (1), the point T' being located radially in the region extending over a radial distance of at most 20% of the radial distance H_{E}, around the point A, the carcass reinforcement (1) and its upturn (10), radially below said point of tangency T', being axially separated by a second profiled member (3) the secant modulus of extension of which is between 8 MPa and 10 MPa, and the upper edge of the upturn (10), in particular the end of said upturn (10), radially above the point T', being axially separated from the main part of the carcass reinforcement (1) by a decoupling layer (4') of vulcanised rubber mix of a secant modulus of elasticity M₁₀ of between 3 and 5 MPa.
